(19) Europäisches Patentamt / European Patent Office / Office européen des brevets

(11) **EP 3 159 162 B1**

(12) **EUROPEAN PATENT SPECIFICATION**

(45) Date of publication and mention
of the grant of the patent:
**19.12.2018 Bulletin 2018/51**

(51) Int Cl.:
**B32B 27/20** (2006.01)    **B32B 17/10** (2006.01)
**C08J 7/04** (2006.01)    **C08K 3/04** (2006.01)
**C08L 101/02** (2006.01)

(21) Application number: **15807122.5**

(22) Date of filing: **09.06.2015**

(86) International application number:
**PCT/JP2015/002879**

(87) International publication number:
**WO 2015/190086 (17.12.2015 Gazette 2015/50)**

(54) **RESIN COMPOSITION, LAYERED PRODUCT, AND PROCESS FOR PRODUCING LAYERED PRODUCT**

HARZZUSAMMENSETZUNG, SCHICHTPRODUKT UND VERFAHREN ZUR HERSTELLUNG EINES SCHICHTPRODUKTS

COMPOSITION DE RÉSINE, ET STRATIFIÉ AINSI QUE PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2014 JP 2014121732**
**20.11.2014 JP 2014235234**

(43) Date of publication of application:
**26.04.2017 Bulletin 2017/17**

(73) Proprietors:
• **Toyo Ink SC Holdings Co., Ltd.**
**Chuo-ku, Tokyo 104-8377 (JP)**
• **Toyocolor Co., Ltd.**
**Chuo-ku, Tokyo 104-8381 (JP)**

(72) Inventors:
• **MORITA, Yu**
**Tokyo 104-8381 (JP)**
• **WATANABE, Katsumi**
**Tokyo 104-8381 (JP)**
• **NAHATA, Nobuyuki**
**Tokyo 104-8381 (JP)**
• **MASUDA, Motoki**
**Tokyo 104-8381 (JP)**
• **HIRAYAMA, Toshiaki**
**Tokyo 104-8381 (JP)**

(74) Representative: **Pfenning, Meinig & Partner mbB**
**Patent- und Rechtsanwälte**
**Theresienhöhe 11a**
**80339 München (DE)**

(56) References cited:
EP-A1- 1 764 382    EP-A1- 2 431 175
WO-A1-2007/114645    WO-A2-2014/189549
JP-A- H0 615 223    JP-A- H0 871 501
JP-A- 2006 239 519    JP-A- 2008 302 286
JP-A- 2010 279 899    JP-A- 2011 201 961
JP-A- 2011 252 052    JP-A- 2012 112 088
JP-A- 2013 209 494    US-A1- 2009 142 579
US-A1- 2010 059 495

## Description

### Technical Field

The present invention relates to a resin composition and a laminate. More specifically, the present invention relates to a resin composition composed of carbon nanotube and resin. Further, the present invention relates to a laminate formed by laminating a carbon nanotube-containing layer containing the composition.

### Background Art

Carbon nanotube is a tubular carbon material with a diameter of several nanometers to several tens of nanometers. Carbon nanotube has high conductivity and mechanical strength. Therefore, carbon nanotube, as a high performance material, is expected to be applied to a wide range of areas including electronics and energy engineering. Examples of the high performance material are fuel cell, electrode, electromagnetic wave shield material, conductive resin, material for field emission display (FED), storage material of various types of gas such as hydrogen and the like.

A conductive transparent film using carbon nanotube is known as an example of a developed high performance material. For example, a lamination of a carbon nanotube conductive film and a transparent protective film on one side of a transparent substrate is proposed in Patent Literature 1. Further, a method for manufacturing a conductive transparent film is proposed in Patent Literature 2, in which a substrate surface is coated with carbon nanotube dispersion, and dried, and then coated with a resin solution.

On the other hand, as an example of a developed high performance material, a carbon nanotube is used for color material only in few examples. Instead of carbon nanotube, carbon black is generally used as a color material. For example, as described in Patent Literatures 3 and 4, carbon black is used to obtain jet-black resin-coated product, film and molded product. Carbon black is dispersed homogeneously in a resin solution or a solid resin.

However, a color material composed of carbon black tends to have high lightness (L*) (i.e. gray and white). Further, chromaticity (a*,b*) is directed to positive (+a*:red, +b*:yellow). L*, a* and b* represent values described in the L*a*b* color system specified by JIS Z8729. Therefore, it is difficult to express jet black type color so-called "piano black" and "raven black" with carbon black.

Further, the color tone of a molded product using carbon black tends to vary depending on the primary particle diameter of carbon black. To be specific, when carbon black with a small primary particle diameter is used, blackness decreases while blueness appears. In this manner, in the conventional black color material blackness and blueness are in a trade-off relationship. Thus, it has been difficult to reproduce a color tone with a high degree of blackness and with blueness, which is, a jet-black color tone.

Patent Literatures 5, 6 and 7 relate to preparation of blackness of a color material composed of carbon black. In preparation of blackness, the colloidal properties such as the particle size and the agglomerated particle size of carbon black are changed, for example. Further, surface treatment such as ozone oxidation and nitric acid oxidation is performed in carbon black. By such treatment, the dispersion state in a dispersed system is changed.

Further, a method that adds an organic pigment such as phthalocyanine blue to carbon black is known. By such a method, a color material can express blueness in addition to blackness. However, the degree of blackness decreases due to the addition of an organic pigment in the color material. Accordingly, when a molded body containing such a color material is observed in direct sunlight, slight redness is observed to rise from the molded body. This is known as the occurrence of bronzing.

Further, in Patent Literatures 8, 9 and 10, the texture of coating is improved by a method of suppressing the scattering at the outermost surface. In this method, a base layer is coated with a color base layer using a pigment, and then coated with a color clear layer. However, because a dye is used in the color base layer, it is impossible to form a coating structure with high light resistance and weather resistance.

Moreover, Patent Literature 11 discloses a substrate for vibration and acoustic abatement, wherein the substrate has composite layer thereon and the composite layer comprises an elastomeric polymer matrix comprising carbon nanotubes dispersed or distributed therein. Furthermore, Patent Literature 12 discloses interlayers that comprise a polymer film onto which microlines have been formed from a conductive material, wherein the microlines can comprise carbon nanotubes. Besides, Patent Literature 13 discloses an electrical circuit-forming film composition applied to a window in order to provide security and heat sensing capabilities. What is more, Patent Literature 14 discloses a conductive composite material including a base layer, a conductive fiber thin-film made of conductive fiber and formed on the base layer, and a mixture layer in which part of the conductive fiber is inserted into part of the base layer. In addition, Patent Literature 15 discloses dual core compositions comprising at least one filler, at least one curable monomer comprising at least one of an ethylenic unit or cyclic ether unit or mixture thereof, at least one photoinitiator and at least one thermal initiator.

**Citation List**

**Patent Literature (PTL)**

PTL1: Japanese Unexamined Patent Application Publication No. 2010-192186
PTL2: Published Japanese Translation of PCT International Publication for Patent Application No. 2004-526838
PTL3: Japanese Unexamined Patent Application Publication No. 2001-179176
PTL4: Japanese Unexamined Patent Application Publication No. 2004-098033
PTL5: Japanese Unexamined Patent Application Publication No. H6-122834
PTL6: Japanese Unexamined Patent Application Publication No. H6-136287
PTL7: Japanese Unexamined Patent Application Publication No. 2008-285632
PTL8: Japanese Unexamined Patent Application Publication No. H6-15223
PTL9: Japanese Unexamined Patent Application Publication No. H8-71501
PTL10: Japanese Unexamined Patent Application Publication No. 2010-279899
PTL11: EP 2 431 175 A1
PTL12: US 2010/0059495 A1
PTL13: US 2009/0142579 A1
PTL14: WO 2007/114645 A1
PTL15: EP 1 764 382 A1

**Summary of Invention**

**Technical Problem**

The present invention has been accomplished to solve the above problems. An object of the present invention is thus to provide a resin composition with a high degree of blackness and with blueness; in other words, to provide a jet-black resin composition. Further, an object of the present invention is to provide a laminate having the resin composition.

**Solution to Problem**

As a result of intensive studies to solve those problems, the inventors of the present invention have found that a laminate of a jet-black resin composition is obtained by lamination of a resin composition containing carbon nanotube and resin. On the basis of this finding, the present inventors have invented the present invention.

Specifically, one aspect of the present disclosure relates to a resin composition composed at least of carbon nanotube and resin. In a laminate where a carbon nanotube-containing layer containing the resin composition and having a film thickness of 10μm is laminated above a substrate, when the laminate is measured from a direction of a laminated surface, L* of the laminate is equal to or less than 2.5, a* of the laminate is in a range of -2 to 2, and b* of the laminate is in a range of -1.5 to 0. Note that L*, a* and b* indicate values in L*a*b* color system specified in JIS Z8729.

Further, another aspect of the present disclosure relates to a laminate where a carbon nanotube-containing layer composed at least of carbon nanotube and resin is laminated above a substrate. When a film thickness of the carbon nanotube-containing layer is 10μm, when the laminate is measured from a direction of a laminated surface, L* of the laminate is equal to or less than 2.5, a* of the laminate is in a range of -2 to 2, and b* of the laminate is in a range of -1.5 to 0.

In the above-described laminate, it is preferred that a clear layer is further laminated above a surface laminated with the carbon nanotube-containing layer. When the laminate is measured from a direction of a laminated surface, it is preferred that L* of the laminate is equal to or less than 2.5, a* of the laminate is in a range of -2 to 2, and b* of the laminate is in a range of -2 to 0.3.

Further, in the above-described laminate, when the laminate is measured from a direction of a laminated surface, it is preferred that an average reflectance at a wavelength of 380 to 780nm is equal to or less than 5%.

Further, in the substrate, it is preferred that an average transmittance at a wavelength of 380 to 780nm is equal to or less than 5%.

Further, another aspect of the present invention relates to a production method of a laminate where a carbon nanotube-containing layer composed at least of carbon nanotube and resin is laminated above a substrate, and a clear layer is further laminated above a surface laminated with the carbon nanotube-containing layer. When the laminate is measured from a direction of a laminated surface, L* of the laminate is equal to or less than 2.5, a* of the laminate is in a range of -2 to 2, and b* of the laminate is in a range of -2 to 0.3. The carbon nanotube-containing layer above the substrate is formed by coating. The clear layer is transparent resin or glass. Note that L*, a* and b* indicate values in L*a*b* color system specified in JIS Z8729.

**Advantageous Effects of Invention**

A resin composition accompanied by excellent jet-black color is obtained with use of a resin composition according to the present invention. A resin composition and a laminate obtained by the present invention can be used in a wide range of application areas where a color material with a high degree of jet-blackness is needed.

**Description of Embodiments**

A resin composition and a laminate according to the present invention are described hereinafter in detail with reference to embodiments.

(1) Resin composition (a)

A resin composition (a) according to this embodiment at least contains carbon nanotube (b) and resin (c).

To obtain the resin composition (a) according to this embodiment, it is preferred to perform treatment to disperse the carbon nanotube (b) and the resin (c) in a medium. A machine to be used for this treatment is not particularly limited. For example, the machine may be Paint conditioner (manufactured by Red Devil, Inc.), ball mill, sand mill ("Dyno-Mill" manufactured by Shinmaru Enterprises Corporation), attritor, pearl mill ("DCP mill" manufactured by Nippon Eirich Co., Ltd.), CoBall mill, basket mill, homomixer, homoniser ("Cleamix" manufactured by M Technique Co., Ltd.), wet jet mill ("Genus PY" manufactured by GENUS Co., Ltd", Nanomizer" manufactured by Nanomizer, Inc), Hoover muller, triple roll mill, extruder and the like, although not limited thereto.

Further, a high-speed mixer may be used to obtain the resin composition (a). Examples of the high-speed mixer are Homodisper (manufactured by Primix Corporation), Filmix (manufactured by PRIMIX Corporation), Dissolver (manufactured by Inoue MFG., Inc.) and Hyper HS (manufactured by Ashizawa Finetech Ltd.), for example, although not limited thereto.

As a dispersant, a surfactant or a resin dispersant may be used. Surfactants are classified into anionic, cationic, nonionic and ampholytic types. An appropriate amount of a suitable type of dispersant may be used according to the properties required for the dispersion of the resin (c). A resin dispersant is suitable for use as a dispersant.

In the case of selecting an anionic surfactant, its type it not particularly limited. Specifically, anionic surfactants include fatty acid salt, polysulfonate, polycarboxylate, alkyl sulfuric ester salt, alkyl aryl sulfonate, alkyl naphthalene sulfonate, dialkyl sulfonate, dialkyl sulfosuccinate, alkyl phosphate, polyoxyethylene alkyl ether sulfate, polyoxyethylene alkyl aryl ether sulfate, naphthalenesulfonate formalin condensate, polyoxyethylene alkyl phosphate sulfonate, glycerol borate fatty acid ester, and polyoxyethylene glycerol fatty acid ester, although not limited thereto. Anionic surfactants include sodium dodecylbenzenesulfonate, sodium lauryl sulfate, sodium polyoxyethylene lauryl ether sulfate, polyoxyethylene nonylphenyl ethereal sulfate ester salt, and sodium salt of β-naphthalenesulfonate formalin condensate, although not limited thereto.

Cationic surfactants include alkylamine salt and quaternary ammonium salt. Specific examples of cationic surfactants are stearylamine acetate, trimethyl palm ammonium chloride, trimethyl tallow ammonium chloride, dimethyl dioleoyl ammonium chloride, methyl oleoyl diethanol chloride, tetramethyl ammonium chloride, lauryl pyridinium chloride, lauryl pyridinium bromide, lauryl pyridinium disulfate, cetyl pyridinium bromide, 4-alkyl mercaptopyridine, poly(vinylpyridine)-dodecyl bromide, and dodecylbenzil triethyl ammonium chloride, although not limited thereto. Further, ampholytic surfactants include aminocarboxylate, although not limited thereto.

Nonionic surfactants include polyoxyethylene alkyl ether, polyoxy alkylene derivative, polyoxyethylene phenyl ether, sorbitan fatty acid ester, polyoxyethylene sorbitan fatty acid ester, and alkyl aryl ether, although not limited thereto. Specifically, nonionic surfactants include polyoxyethylene lauryl ether, sorbitan fatty acid ester, and polyoxyethylene octylphenyl ether, although not limited thereto.

A surfactant to be selected is not limited to a single surfactant. Thus, two types or more surfactants may be used in combination. For example, a combination of an anionic surfactant and a nonionic surfactant, or a combination of a cationic surfactant and a nonionic surfactant may be used. The amount of composition may be an appropriate amount for each surfactant component as described above. A combination of an anionic surfactant and a nonionic surfactant is preferred for use. An anionic surfactant is preferably polycarboxylate. A nonionic surfactant is preferably polyoxyethylene phenyl ether.

Further, as specific examples of resin dispersants; polyurethane; polycarboxylate ester ester of polyacrylate, unsaturated polyamide, polycarboxylate, polycarboxylate (partial) amine salt, polycarboxylate ammonium salt, polycarboxylate alkylamine salt, polysiloxane, long-chain polyaminoamide phosphate, hydroxyl group-containing polycarboxylate ester and modification of those; an oily dispersant of amide or its salt formed by a reaction between lower alkyleneimine polymer and free carboxyl group-containing polyester; (meth)acrylic acid-styrene copolymer, (meth)acrylic acid-(meth)acrylic acid ester copolymer, styrene-maleic acid copolymer, water-soluble resin or water-soluble polymer compound such as polyvinyl alcohol and polyvinyl pyrrolidone; polyester-based resin; modified polyacrylate-based resin; ethylene oxide/propylene oxide addition compound; and phosphoester-based resin may be used, although not limited thereto. Those can be used alone or in combination, although not limited thereto.

Out of the above-described dispersants, a polymer dispersant with an acid functional group such as polycarboxylic acid is preferred for use. This is because such a polymer dispersant can reduce the viscosity of a dispersion composition and increase the spectral transmission of the dispersion composition with a small additive amount. It is preferred to use a resin dispersant that is 3 to 300 mass% with respect to the carbon nanotube (b). Further, it is more preferred to use a resin dispersant that is 5 to 100mass% in terms of film formation.

Commercially available resin dispersants are Disperbyk-101, 103, 107, 108, 110, 111, 116, 130, 140, 154, 161, 162, 163, 164, 165, 166, 170, 171, 174, 180, 181, 182, 183, 184, 185, 190, 2000, 2001, 2020, 2025, 2050, 2070, 2095, 2150 and 2155, or Anti-Terra-U, 203 and 204, or BYK-P104, P104S, 220S and 6919, or Lactimon and Lactimon-WS, or Bykumen produced by BYK Additives & Instruments, SOLSPERSE-3000, 9000, 13000, 13240, 13650, 13940, 16000, 17000, 18000, 20000, 21000, 24000, 26000, 27000, 28000, 31845, 32000, 32500, 32550, 33500, 32600, 34750, 35100, 36600, 38500, 41000, 41090, 53095, 55000 and 76500 produced by Lubrizol Japan Limited, EFKA-46, 47, 48, 452, 4008, 4009, 4010, 4015, 4020, 4047, 4050, 4055, 4060, 4080, 4400, 4401, 4402, 4403, 4406, 4408, 4300, 4310, 4320, 4330, 4340, 450, 451, 453, 4540, 4550, 4560, 4800, 5010, 5065, 5066, 5070, 7500, 7554, 1101, 120, 150, 1501, 1502 and 1503 manufactured by BASF Japan Ltd, and AJISPER PA111, PB711, PB821, PB822 and PB824 produced by Ajinomoto Fine-Techno Co.,Inc., although not limited thereto.

A solvent to be used for obtaining the resin composition (a) is not particularly limited. Any of a water solution, an aqueous solvent and an organic solvent may be used as a solvent.

Among organic solvents, an organic solvent with a boiling point of 50 to 250°C is easy for use. Such an organic solvent has good workability in coating and good drying characteristics before and after curing. Specific examples of solvents are alcohol type solvents such as methanol, ethanol and isopropyl alcohol; ketone type solvents such as acetone, butyl diglycol acetate and MEK (methyl ethyl ketone); ester type solvents such as ethyl acetate and butyl acetate; ether type solvents such as dibutyl ether, ethylene glycol and monobutyl ether; and bipolar aprotic solvents such as N-methyl-2-pyrolidone, although not limited thereto. Those solvents can be used alone or in combination of two or more types.

Further, aromatic hydrocarbon type solvents such as toluene, xylene, Solvesso #100 (produced by Exxon Mobil Corporation) and Solvesso #150 (produced by Exxon Mobil Corporation); aliphatic hydrocarbon type solvents such as hexane, heptane, octane and decane; or amide-type solvents such as cellosolve acetate, ethyl cellosolve and butyl cellosolve may be used. Those solvents can be also used alone or in combination of two or more types.

Further, the above-described solvent may contain an additive as appropriate so as not to inhibit the object of this embodiment. Examples of additives are pigment, wet penetrant, anti-skinning agent, ultraviolet absorber, antioxidant, cross-linker, antiseptic agent, mildew-proofing agent, viscosity modifier, pH adjuster, leveling agent, antifoaming agent and the like, although not limited thereto.

(2) Carbon nanotube (b)

The carbon nanotube (b) has a shape where planar graphite is rolled into a cylindrical form. The carbon nanotube (b) may be a single-layer carbon nanotube, a multi-layer carbon nanotube, or a mixture of those. The single-layer carbon nanotube has a structure in which a single layer of graphite is rolled. The multi-layer carbon nanotube has a structure in which a two, or three or more layers of graphite are rolled. The carbon nanotube (b) is preferably the multi-layer carbon nanotube in terms of cost and coloration efficiency. Further, the side wall of the carbon nanotube (b) does not necessarily have a graphite structure. For example, carbon nanotube with a side wall having an amorphous structure may be used as the carbon nanotube (b).

The shape of the carbon nanotube (b) is not limited. For example, it can be in various forms including needle, cylindrical tube, fish bone (fish-boned or cup-stacked), cards (platelet) and coil. Specific examples of the carbon nanotube (b) forms include graphite whisker, filamentous carbon, graphite fiber, ultrafine carbon tube, carbon tube, carbon fibril, carbon microtube and carbon nanofiber, although not limited thereto. As the carbon nanotube (b), the above form may be used alone or in combination of two or more types.

In this embodiment, the carbon nanotube (b) is preferably in the form other than fish bone (fish-boned or cup-stacked), cards (platelet) and coil. When the carbon nanotube (b) is in the form of fish bone or cards, the carbon nanotube (b) is cut along the lamination plane (x-y plane) of a cup or card-shaped graphite sheet due to shearing stress that occurs during production of a resin composition and a molded body. Thus, the carbon nanotube (b) cannot form a sufficient network structure in resin. Accordingly, the light confinement effect of the carbon nanotube (b) is reduced, which can cause a decrease in the blackness of the resin composition and the molded body. When the carbon nanotube (b) is in the form of coil also, its three-dimensional structure is likely to be destroyed during production of a resin composition and a molded body. There is thus a possibility that the coloration effect of the carbon nanotube (b) is degraded.

The carbon nanotube (b) according to this embodiment may be a carbon nanotube that is produced by any method. A carbon nanotube is generally produced by laser ablation method, arc discharge method, thermal CVD method, plasma CVD method, combustion method or the like, although not limited thereto. For example, the carbon nanotube (b) can be produced by contact reaction of a carbon source with a catalyst at 500 to 1000°C in an atmosphere where the oxygen concentration is equal to or less than 1 volume%. The carbon source may be at least one of hydrocarbon and alcohol.

A source gas that is the carbon source of the carbon nanotube (b) may be any known one. For example, hydrocarbon such as methane, ethylene, propane, butane and acetylene, carbon monoxide and alcohol may be used the source gas containing carbon, although not limited thereto. It is preferred to use at least one of hydrocarbon and alcohol as the source gas in terms of usability.

According to need, after activating a catalyst in a reducing gas atmosphere, of the source gas and the catalyst may be preferably brought into contact reaction in an atmosphere where the oxygen concentration is equal to or less than 1 volume%. Further, the source gas, together with the reducing gas, may be brought into contact reaction with the catalyst. Although the atmosphere where the oxygen concentration is equal to or less than 1 volume% is not particularly limited, an atmosphere of an inert gas such as rare gas such as argon gas and nitrogen gas is preferred for use. The reducing gas that is used for activation of a catalyst may be hydrogen or ammonia, for example, although not limited thereto. Hydrogen is preferred for use as the reducing gas.

As the catalyst, various known metal oxides may be used. For example, a catalyst that combines metal as an active ingredient such as cobalt, nickel or iron and metal as a supported ingredient such as magnesium or aluminum may be used.

The fiber diameter of the carbon nanotube (b) is preferably 1 to 500nm and more preferably 8 to 25nm in terms of easiness of dispersion and hue.

The fiber diameter of the carbon nanotube (b) is calculated as follows. First, the carbon nanotube (b) is observed and images are taken by a scanning transmission electron microscope. Next, any 100 carbon nanotubes (b) are selected in the observation images, and their outer diameters are measured. Then, the average particle diameter (nm) of the carbon nanotubes (b) is calculated as the number average of the outer diameters.

The fiber length of the carbon nanotube (b) is preferably 0.1 to 150$\mu$m and more preferably 1 to 10$\mu$m in terms of easiness of dispersion and hue.

The degree of purity of carbon in the carbon nanotube (b) is represented by the content (mass%) of carbon atoms in the carbon nanotube (b). The degree of purity of carbon is preferably 85mass% or higher, more preferably 90mass% or higher, and further preferably 95mass% or higher, with respect to the carbon nanotube (b) 100mass%.

In this embodiment, the carbon nanotube (b) generally exists as a secondary particle. The shape of the secondary particle may be in the state where the carbon nanotubes (b), which are general primary particles, are in complicated entanglement with each other, for example. It may be a collection of the linear carbon nanotubes (b). The secondary particle that is a collection of the linear carbon nanotubes (b) easily ravels when compared with that in the entanglement state. Further, because the linear shape exhibits higher dispersibility than the entanglement shape, it is preferred to use as the carbon nanotube (b).

The carbon nanotube (b) may be a carbon nanotube that is surface-treated. Further, the carbon nanotube (b) may be a carbon nanotube derivative added with functional group such as carboxyl group. Further, the carbon nanotube (b) containing a substance such as organic compound, metal atom or fullerene may be used.

(3) Resin (c)

The resin (c) is selected from natural resin and synthetic resin. The resin (c) may be a single resin. As the resin (c), two or more types of resins may be selected from natural resin and synthetic resin. Two or more types of resins may be used in combination.

Examples of natural resin are natural rubber, gelatin, rosin, shellac, polysaccharide and gilsonite, although not limited thereto. Further, examples of synthetic resin are phenolic resin, alkyd resin, petroleum resin, vinyl-based resin, olefin resin, synthetic rubber, polyester, polyamide resin, acrylic resin, styrene resin, epoxy resin, melamine resin, urethane resin, amino resin, amide resin, imide resin, fluorine-based resin, vinylidene fluoride resin, vinyl chloride resin, ABS resin, polycarbonate, silicone-based resin, nitrocellulose, rosin modified phenolic resin and rosin modified polyamide resin, although not limited thereto.

Among those resins, it is preferred that at least one of acrylic resin and polyester resin is contained in the carbon nanotube-containing layer (e) in terms of light resistance. Further, it is preferred that at least one of acrylic resin and polyester resin is contained in a base coating, which is described later.

Water-soluble resin used for emulsion paint is preferably water-soluble resin with an acid value of 20 to 70 mg KOH/g and with a hydroxyl value of 20 to 160 mg KOH/g. To be specific, polyester resin, acrylic resin and polyurethane resin are particularly suitable for use as water-soluble resin. Polyester resin is resin that uses polyhydric alcohol and polybasic acid as raw material. The acid value of polyester resin is 20 to 70 mg KOH/g, preferably 25 to 60 mg KOH/g, and more preferably 30 to 55 mg KOH/g. The hydroxyl value of polyester resin is 20 to 160 mg KOH/g, and preferably 80 to 130 mg KOH/g.

In this embodiment, the acid value is the mass (mg) of potassium hydroxide which is required to neutralize 1g resin. Further, the hydroxyl value is the mass (mg) of potassium hydroxide which is required to neutralize acid that is needed for a reaction between hydroxyl value of resin and phthalic anhydride in the 1g resin.

Note that, in this embodiment, the measurement of the acid value and the hydroxyl value of resin can be carried out according to JIS K-0070.

Water-soluble polyester resin can be easily obtained by known esterification reaction. Water-soluble polyester resin is resin that is produced using polyhydric alcohol and polybasic acid as raw material. Raw material may be a compound that constitutes normal polyester resin. According to need, oils and fats may be added to water-soluble polyester resin.

Examples of polyhydric alcohol are ethylene glycol, 1,2-propylene glycol, 1,3-propylene glycol, 1,3-butylene glycol, 1,4-butanediol, 1,6-hexanediol, diethylene glycol, dipropylene glycol, neopentyl glycol, triethylene glycol, hydrogenated bisphenol A, glycerin, trimethylolethane, trimethylolpropane, pentaerythritol and dipentaerythritol, although not limited thereto. The polyhydric alcohol may be used alone or in combination of two or more types. Examples of polybasic acid are phthalic anhydride, isophthalic acid, terephthalic acid, succinic anhydride, adipic acid, azelaic acid, sebacic acid, maleic anhydride, fumaric acid, itaconic acid and trimellitic anhydride, although not limited thereto. The polybasic acid may be used alone or in combination of two or more types. Examples of oils and fats are soyabean oil, coconut oil, safflower oil, bran oil, castor oil, tung oil, linseed oil, tall oil and fatty acid obtained from those, although not limited thereto.

Acrylic resin is resin that uses vinyl monomer as raw material. The acid value of acrylic resin is 20 to 70 mg KOH/g, preferably 22 to 50 mg KOH/g, and more preferably 23 to 40 mg KOH/g. The hydroxyl value of acrylic resin is 20 to 160 mg KOH/g, and preferably 80 to 150 mg KOH/g.

Water-soluble acrylic resin can be easily obtained by known solution polymerization method or another method. Water-soluble acrylic resin is resin that is produced using vinyl monomer as raw material. Raw material may be a compound that constitutes normal acrylic resin. Further, in the above method, organic peroxide is used as an initiator of a polymerization reaction.

Examples of vinyl monomer are ethylene unsaturated carboxylic acids such as acrylic acid, methacrylic acid, itaconic acid, maleic acid, fumaric acid and crotonic acid; acrylic acid or methacrylic acid alkyl esters such as methyl, ethyl, propyl, butyl, isobutyl, tertiary butyl, 2-ethylhexyl,lauryl, cyclohexyl and stearyl; acrylic acid or methacrylic acid hydroxyalkyl esters such as 2-hydroxyethyl, 2-hydroxypropyl, 3-hydroxypropyl and polyethylene glycol with a molecular weight of 1000 or less; acrylic acid or methacrylic acid amides; or their alkyl ethers, although not limited thereto. Examples of the amide are acrylamide, methacrylamide, N-methylol acrylamide, diacetone acrylamide, diacetone methacrylamide, N-methoxymethyl acrylamide, N-methoxymethyl methacrylamide, and N-butoxymethyl acrylamide, although not limited thereto.

Another example is glycidyl (meth)acrylate containing epoxy group. Yet another example is monomers containing a tertiary amino group. Examples include N,N-dimethylaminomethyl (meth)acrylate and N,N-diethylaminoethyl (meth)acrylate, although not limited thereto. Further examples include aromatic monomer such as styrene, α-methyl styrene, vinyltoluene and vinylpyridine, acrylonitrile, methacrylonitrile, vinyl acetate, and maleic acid or fumaric acid mono or dialkyl esters, although not limited thereto. Examples of organic peroxide are acyl peroxides (e.g., benzoyl peroxide), alkyl hydroperoxides (e.g., t-butylhydroperoxide and p-methane hydroperoxide) and dialkyl peroxides (e.g., di-t-butyl peroxide), although not limited thereto.

Polyurethane resin is resin using polyol and polyisocyanate as raw material. The acid value of polyurethane resin is 20 to 70 mg KOH/g, preferably 22 to 50 mg KOH/g, and more preferably 23 to 35 mg KOH/g. The hydroxyl value of polyurethane resin is 20 to 160 mg KOH/g, and preferably 25 to 50 mg KOH/g.

Water-soluble polyurethane resin can be easily obtained by addition polymerization of polyol and polyisocyanate. Raw material may be polyol and polyisocyanate that constitute normal polyurethane resin.

Examples of polyol are polyester polyol, polyether polyol and acrylic polyol, although not limited thereto. Further, examples of polyisocyanate are phenylene diisocyanate, trilene diisocyanate, xylylene diisocyanate, bisphenylene diisocyanate, naphthylene diisocyanate, diphenylmethane diisocyanate, isophorone diisocyanate, cyclopentylene diisocyanate, cyclohexylene diisocyanate, methyl cyclohexylene diisocyanate, dicyclohexylmethane diisocyanate, trimethylene diisocyanate, tetramethylene diisocyanate, pentamethylene diisocyanate, hexamethylene diisocyanate, propylene diisocyanate, ethylethylene diisocyanate and trimethylhexane diisocyanate, although not limited thereto.

Water-soluble polyester resin, acrylic resin and polyurethane resin are rendered water soluble by neutralization with a basic substance. At this time, it is preferred to use the amount of the basic substance enough to neutralize 40mol% or more of an acid group contained in the water-soluble resin. Examples of the basic substance are ammonia, dimethylamine, trimethylamine, diethylamine, triethylamine, propylamine, triethanolamine, N-methylethanolamine, N-aminoethylethanolamine, N-methyldiethanolamine, morpholine, monoisopropanolamine, diisopropanolamine and dimethylethanolamine, although not limited thereto.

The number average molecular weight of water-soluble resin is not particularly limited. The number average molecular weight is preferably 500 to 50000, more preferably 800 to 25000, and further preferably 1000 to 12000.

Further, the resin (c) is classified into curing resin and lacquer resin. In this embodiment, curing resin is preferred for use. The curing resin (c) is used with an amino resin such as melamine resin or a cross-linker such as (block)polyisocyanate compound, amine compound, polyamide compound and polyhydric carboxylic acid. After the resin (c) and the cross-linker are mixed, they are heated or left at room temperature so that a curing reaction makes progress. Further, non- curing resin may be used as film formation resin, and it may be used in combination with curing resin.

### (4) Laminate (d)

The laminate (d) according to this embodiment is composed of at least two layers: a substrate layer and a carbon nanotube-containing layer (e). The basic structure of the laminate (d) is where the substrate layer is placed below the carbon nanotube-containing layer (e). Another layer may be placed between the substrate layer and the carbon nanotube-containing layer (e).

A substrate to be used for forming the laminate (d) according to this embodiment is not particularly limited. As a material of the substrate, metals such as iron, aluminum, copper or alloy of those metals, inorganic materials such as glass, cement and concrete, resins such as polyethylene resin, polypropylene resin, ethylene-vinyl acetate copolymer resin, polyamide resin, acrylic resin, vinylidene chloride resin, polycarbonate resin, polyurethane resin and epoxy resin, plastics material such as various FRP, wood, natural materials or synthetic materials such as fiber materials (including paper and fabric), although not limited thereto.

Among the above materials, metals such as iron, aluminum, copper or alloy of those metals are preferred for use. Further, resin containing pigment such as carbon black and carbon nanotube is also preferred for use. The average transmittance of those substrates at a wavelength of 380 to 780 nm is 5% of less.

The average transmittance of a substrate at a wavelength of 380 to 780 nm is preferably 5% of less, and more preferably 3% or less. The laminate (d) with a high degree of jet-blackness is obtained when the property of the substrate is within this range.

The shape of the substrate may be in the form of a plate, a film, a sheet, or a molded body. For the production of a molded body, injection molding methods such as insert injection molding, in-molding process, over-molding process, two-color injection molding, core back injection molding and sandwich injection molding, extrusion molding methods such as T-die laminate molding, multi-layer inflation molding, coextrusion molding and extrusion coating, and other molding methods such as multi-layer blow molding, multi-layer calendar molding, multi-layer press molding, slash molding and fusion casting may be used.

The average transmittance is calculated as follows. As an example, a laminate where a carbon nanotube-containing layer containing the above-described resin composition is formed by a bar coater on PET (polyethylene terephthalate) film (lumirror 100, T60 produced by Toray Industries, Inc.) is used. First, using an ultraviolet-visible infrared spectrophotometer (UV-3500 produced by Hitachi, Ltd.), the transmission spectrum at a wavelength of 300 to 1500 nm is measured in the range of 5nm. The measurement is made from the surface where the carbon nanotube-containing layer is laminated on the substrate. In this specification, such a way of measurement is referred to as "measured from the laminated surface" in some cases. Next, the weighted average of the transmittance at a wavelength of 380 to 780 nm is obtained from the measurement values, thereby calculating the average transmittance.

In the method of forming the laminate (d) according to this embodiment, the carbon nanotube-containing layer (e) is formed above the surface of the substrate directly or with a base layer interposed therebetween. In the case where the laminate (d) is an automobile body or automobile parts, it is preferred that undercoating such as electrodeposition coating and chemical conversion coating and intermediate coating are done on the substrate, although it is not limited thereto. The intermediate coating is to form a coating in order to cover up the base, apply chipping-resistance property, and ensure contact with a color clear coating, which is a top coating.

In order to form the laminate (d) according to this embodiment, a method that, after forming the base layer on the substrate, forms the carbon nanotube-containing layer (e) without heating and curing the base layer, and then heats and cures the coating (wet-on-wet method) may be used. Further, a method that, after forming the base layer on the substrate, heats and cures the base layer and then heats and cures the carbon nanotube-containing layer (e) (wet-on-dry method) may be used.

As the base layer, a base paint containing pigment such as carbon black and the resin (c) may be used. Any carbon black may be used as long as it is commercially available or produced as a pigment.

When the content of carbon black in the base paint is represented by PWC, it is 8 to 20 mass%, and preferably 8 to 15 mass%. PWC stands for Pigment Weight Concentration, which is calculated by the following equation.

$$PWC = [(\text{pigment mass})/(\text{total solid mass})] \times 100\ (\%)$$

In the laminate (d) according to this embodiment, it is preferred that a clear layer (f) is further formed above the carbon nanotube-containing layer (e). By the formation of the clear layer (f), the laminate (d) that is lustrous and jet black can be obtained.

L* of the laminate (d) is preferably 2.5 or less, and more preferably 2.0 or less. L* represents L* in the L*a*b* color system specified in JIS Z8729. Further, a* of the laminate is preferably in the range of -2.0 to 2.0, and b* of the laminate is preferably in the range of -1.5 to 0.

In the case where the clear layer (f) is further formed above the carbon nanotube-containing layer (e), b* of the laminate (d) is preferably in the range of -2.0 to 0.3, and more preferably in the range of -2.0 to 0. When b*, particularly, is in this range, the laminate (d) with a high degree of jet-blackness is obtained.

In the above color system, the degree of jet-blackness is higher as L* is smaller. Further, the lightness is higher as L* is smaller. Further, the hue is more black as a* and b* are closer to zero (0). Further, the hue is more blue as the b* is negative and its absolute value is larger. Note that, black color with blueness looks more jet black to human eyes than black color without blueness. Therefore, the above-described numerical ranges are preferable in terms of presenting jet-blackness.

The lightness (L*) and chromaticity (a*,b*) are obtained by measurement using a color difference meter. The measurement is made on the surface of the laminate (d) from the side where the carbon nanotube-containing layer is laminated. As a color difference meter, Spectro Color Meter SE2000 manufactured by NIPPON DENSHOKU INDUSTRIES CO.,LTD. may be used.

The average reflectance of light with a wavelength of 380 to 780 is preferably 5% or less and more preferably 3% or less on the surface of the laminate (d) where the carbon nanotube-containing layer is laminated. When the average reflectance, particularly, is in this range, the laminate (d) with a high degree of jet-blackness is obtained.

The average reflectance is calculated as follows. As an example, a coating formed by a bar coater on a PET (polyethylene terephthalate) film (lumirror 100, T60 produced by Toray Industries, Inc.) is used. First, using an ultraviolet-visible infrared spectrophotometer (UV-3500 produced by Hitachi, Ltd., using an integrating sphere), the absolute reflectance spectrum at a wavelength of 300 to 1500 nm is measured in the range of 5nm. The measurement is made from the surface where the resin composition (a) is laminated on the substrate. In this specification, such a way of measurement is referred to as " measured from the laminated surface " in some cases. Next, the weighted average of the reflectance at a wavelength of 380 to 780 nm is obtained from the measurement values, thereby calculating the average reflectance.

(5) Carbon nanotube-containing layer (e)

The carbon nanotube-containing layer according to this embodiment is composed of the carbon nanotube (b) and the resin (c). A substrate is placed below the carbon nanotube-containing layer (e).

The carbon nanotube-containing layer (e) according to this embodiment can be formed by applying the resin composition (a) by a general technique. Specific examples of techniques are casting, spin coating, dip coating, bar coating, spraying, blade coating, slit die coating, gravure coating, reverse coating, screen printing, mold coating, print transfer, and wet coating containing inkjet, although not limited thereto.

The additive rate of the carbon nanotube (b) in the carbon nanotube-containing layer (e) may be set to an appropriate value according to application. The additive rate is preferably 0.1 to 30 mass%, more preferably 1 to 25 mass%, and further preferably 2 to 15 mass%. When the additive rate, particularly, is within this range, the laminate with a high degree of jet-blackness is obtained.

When the additive rate of the carbon nanotube (b) in the carbon nanotube-containing layer (e) is less than the above range, there is a possibility that the carbon nanotube (b) cannot form a sufficient network structure in resin. Accordingly, the light confinement effect of the carbon nanotube (b) is reduced, which can cause a decrease in the blackness of the laminate (d). On the other hand, when the additive rate of the carbon nanotube (b) in the carbon nanotube-containing layer (e) is more than the above range, the carbon nanotube-containing layer (e) becomes less lustrous, which makes it difficult to obtain the laminate (d) with a high degree of jet-blackness.

Carbon black, in addition to the carbon nanotube (b), may be added to the carbon nanotube-containing layer (e) within the range that does not cause inhibition to the object of the present invention. Specific examples of carbon black are Ketjen black, acetylene black, furnace black and channel black. Carbon black may be generated as a by-product when producing synthesis gas containing hydrogen and carbon monoxide by partial oxidation of hydrocarbon such as naphtha in the presence of hydrogen and oxygen. Further, carbon black may be obtained by oxidation or reduction treatment of the by-product. Carbon black according to the present invention, however, is not limited thereto. The carbon black may be used alone or in combination of two or more types. Further, carbon black with an average particle diameter of 20 nm or less and with a DBP oil absorption of 80 ml/100g or less is preferred for use in terms of blackness enhancement. In this embodiment, the DBP oil absorption represents the amount (ml) of dibutyl phthalate (DBP) that can be contained per 100g carbon black. The DBP oil absorption is a scale to quantify the structure of carbon black. The structure is a complicated aggregation by chemical or physical bonding between carbon black particles.

The average particle diameter of carbon black is calculated in the same manner as the fiber diameter of the carbon nanotube (b). Specifically, the carbon black is first observed and images are taken by a scanning transmission electron microscope. Next, any 100 carbon blacks are selected in the observation images, and their outer diameters are measured. Then, the average particle diameter of the carbon blacks is calculated as the number average of the outer diameters.

The amount of carbon black used is preferably 1 to 100 parts by mass and more preferably 1 to 50 parts by mass, and further preferably 1 to 25 parts by mass, with respect to 100 parts by mass of the carbon nanotube (b). On the other hand, when the amount of carbon black used exceeds 100 parts by mass, the blackness and blueness of a molded body can decrease. If blueness decreases and redness increases, it is difficult to obtain the jet-black laminate.

The average reflectance of the carbon nanotube-containing layer (e) at a wavelength of 380 to 780 is preferably 5% or less and more preferably 3% or less. When the average reflectance, particularly, is within this range, the laminate with a high degree of jet-blackness is obtained.

The film thickness of the carbon nanotube-containing layer (e) is preferably 5$\mu$m or more, and more preferably 10$\mu$m or more.

To form the carbon nanotube-containing layer (e) on a substrate, the most appropriate technique may be selected from general techniques according to the substrate to be formed. The technique is selected from casting, spin coating, dip coating, bar coating, spraying, blade coating, slit die coating, gravure coating, reverse coating, screen printing, mold coating, print transfer, and wet coating containing inkjet, although not limited thereto. By coating the substrate with the resin composition (a) using the above technique, it is possible to form the carbon nanotube-containing layer (e).

(6) Clear layer (f)

The clear layer (f) according to this embodiment has transparency that allows seeing through a coating in the lower layer. Specifically, the material of the clear layer (f) may be a transparent material such as transparent resin and glass. Examples of transparent resin are polyester such as polyethylene terephthalate (PET) and polyethylene naphthalate (PEN), polyimide, polyphenylene sulfide, aramid, polypropylene, polyethylene, polylactic acid, polyvinyl chloride, polycarbonate, polymethyl methacrylate, alicyclic acrylic resin, cycloolefin resin, triacetylcellulose, epoxy resin, phenolic plastic, alkyd resin, petroleum resin, vinyl-based resin, olefin resin, synthetic rubber, polyamide resin, acrylic resin, styrene resin, melamine resin, urethane resin, amino resin, fluorine-based resin, vinylidene fluoride resin, vinyl chloride resin, ABS resin, silicone resin, nitrocellulose, rosin modified phenolic resin, rosin modified polyamide resin, natural rubber, gelatin, rosin, shellac, polysaccharide and gilsonite, although not limited thereto. The glass may be general soda glass. A plurality of those materials may be used in combination. Further, carbon black and carbon nanotube (b) that allows seeing through a coating in the lower layer may be contained in the clear layer (f).

A two-part clear paint is preferred for use as resin of the clear layer (f). An example of the two-part clear paint is two-part curing urethane paint. It is preferred that the base resin of the two-part clear paint is polyol resin which contains a hydroxyl group, and a curing agent is isocyanate. This improves the appearance and the acid resistance of the coating of the clear layer (f). Although polyol resin that is used as the base resin is not particularly lmited, it may be polyester polyol, polyether polyol, acrylic polyol, polycarbonate polyol, polyurethane polyol or the like, for example.

Examples of the above-described isocyanate are phenylene diisocyanate, trilene diisocyanate, xylylene diisocyanate, bisphenylene diisocyanate, naphthylene diisocyanate, diphenylmethane diisocyanate, isophorone diisocyanate, cyclopentylene diisocyanate, cyclohexylene diisocyanate, methyl cyclohexylene diisocyanate, dicyclohexylmethane diisocyanate, trimethylene diisocyanate, tetramethylene diisocyanate, pentamethylene diisocyanate, hexamethylene diisocyanate, propylene diisocyanate, ethylethylene diisocyanate and trimethylhexane diisocyanate, although not limited thereto.

To form the clear layer (f) on the carbon nanotube-containing layer (e), the most appropriate technique may be selected according to the substrate to be formed. The technique may be selected from general methods including dry methods such as vacuum deposition, EB deposition, sputtering deposition, casting, spin coating, dip coating, bar coating, spraying, blade coating, slit die coating, gravure coating, reverse coating, screen printing, mold coating, print transfer, and wet coating containing inkjet. The clear layer (f) may be made by the lamination of films formed in advance. When the clear layer (f) is laminated on the carbon nanotube-containing layer (e), those layers are not necessarily in close contact with each other.

The film thickness of the clear layer (f) is preferably in the range of 5 to 40 μm, and more preferably in the range of 25 to 35 μm. When the film thickness, particularly, is within this range, the laminate with a high degree of jet-blackness is obtained.

As the clear layer (f), the following transparent protective film may be formed. To reduce the average reflectance of the laminate (d), the refractive index of the transparent protective film is preferably lower than the refractive index of the carbon nanotube-containing layer (e) by 0.3 or more.

A material of the transparent protective film is not particularly limited as long as it is within the above range. The material may be a single substance. The single substance may be inorganic compound or organic compound. Examples of the single substance are inorganic compound such as silicon oxide, magnesium fluoride, cerium fluoride, lanthanum fluoride, calcium fluoride, and organic compound such as polymer containing elemental silicon or elemental fluorine.

The transparent protective film may be composed of composite materials containing inorganic compound or organic compound. The composite materials preferably have cavities inside. The transparent protective film may have inorganic compound particulates. The particulates may be silica or acrylic. The particulates may have cavities inside. The organic compound may be one or more compounds selected from a group of polymers made by polymerization of monofunctional or multifunctional (meth)acrylic ester, siloxane compound and monomer containing perfluoroalkyl group. The composite material may be a mixture of those.

Specific examples of the silicon oxide are tetraalkoxysilanes such as tetramethoxysilane, tetraethoxysilane, tetra-n-propoxysilane, tetra-i- propoxysilane, tetra-n-butoxysilane; trialkoxysilanes such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-pentyltriethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, N-(2-aminoethyl)-3-aminopropyltrimethoxysilane, N-(2-aminoethyl)-3-aminopropyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptpropyltrimethoxysilane, 3-mercaptpropyltriethoxysilane, 3-isocyanatepropyltrimethoxysilane, 3-isocyanate propyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, 3-ureidopropyltrimethoxysilane, 3-ureidopropyltriethoxysilane, vinyltrimethoxysilane, vinyltriethoxysilane, allyltrimethoxysilane and vinyltriacetoxysilane; and organoalkoxysilane such as methyltriacetyloxysilane and methyltriphenoxysilane.

The transparent protective film may be a sol-gel coating film. The sol-gel coating film is formed using silicon oxide and alcohol, water or acid as raw materials. Those raw materials form the sol-gel coating film by hydrolysis reaction and polymerization reaction. Further, the transparent protective film may be a sputtered film of silicon oxide, although not limited thereto.

Further, as the transparent protective film, a composite material using silica particulates having cavities inside may be used. As the composite material, OPSTAR (registered trademark) TU-2180 (produced by JSR Corporation) or ELCOM (registered trademark) P-5024 (produced by JGC Catalysts and Chemicals Ltd.) may be used, although not limited thereto.

"Jet-blackness" in this specification means that L* of the laminate (d) is equal to or less than 2.5 and b* of the laminate is equal to or more than -1.5 and equal to or less than 0 based on the L*a*b* color system specified in JIS Z8729. L* and b* are measured from the surface where the carbon nanotube-containing layer (e) is laminated on the substrate.

In the case where the clear layer (f) is laminated further on the laminated surface of the carbon nanotube-containing layer (e), "jet-blackness" means that L* is equal to or less than 2.5 and b* is equal to or more than -2.0 and equal to or less than 0.3. Those values are measured by a color difference meter. The color difference meter may be Spectro Color Meter SE2000 manufactured by NIPPON DENSHOKU INDUSTRIES CO.,LTD.

## Examples

The present invention is described more specifically with reference to the following examples. The present invention is not restricted to the following examples as long as not departing from the scope of the present invention. In the examples, "parts" indicate "parts by mass", and "%" indicates "mass%" unless otherwise noted. Further, in some cases, "carbon nanotube" is abbreviated to "CNT", and "carbon black" is abbreviated to "CB".

<Physical properties measurement method>

The physical properties of laminates that are used in examples and comparative examples described later were measured by the following method.

<Film thickness>

The film thickness of the carbon nanotube-containing layer and the clear layer in the laminate were calculated as follows. First, three points in a coating film were measured using a film thickness meter (DIGIMICRO MH-15M by Nikon Corporation). Then, the average of them was obtained as the film thickness.

<L*a*b*)>

In the laminate, lightness (L*) and chromaticity (a*,b*) in the L*a*b* color system specified in JIS Z8729 were measured. The measurement was made using a color difference meter (Spectro Color Meter SE2000 manufactured by NIPPON DENSHOKU INDUSTRIES CO.,LTD. Further, the measurement was made from the surface where the resin composition is laminated on the substrate.

<Average reflectance>

The average reflectance of a coating formed by a bar coater on a PET (polyethylene terephthalate) film (lumirror 100, T60 produced by Toray Industries, Inc.) was calculated. First, using an ultraviolet-visible infrared spectrophotometer (UV-3500 produced by Hitachi, Ltd.), the absolute reflectance spectrum at a wavelength of 300 to 1500 nm was measured in the range of 5nm. The measurement was made from the surface where the resin composition was laminated on the substrate. Then, the weighted average of the reflectance at a wavelength of 380 to 780 nm was calculated from the measurement values, thereby obtaining the average reflectance.

<Average transmittance>

The average transmittance of a PET (polyethylene terephthalate) film (lumirror 100, T60 produced by Toray Industries, Inc.) was calculated. First, using an ultraviolet-visible infrared spectrophotometer (UV-3500 produced by Hitachi, Ltd.), the transmission spectrum at a wavelength of 300 to 1500 nm was measured in the range of 5nm. The measurement was made from the surface where the resin composition was laminated on the substrate. Then, the weighted average of the transmittance at a wavelength of 380 to 780 nm was calculated from the measurement values, thereby obtaining the average transmittance. The average transmittance of the PET film was 89%.

The average transmittance of a stainless plate produced by Hikari Limited Company (UniHobby (registered trademark) material series, KHS532, thickness 0.5mm) was calculated. First, using an ultraviolet-visible infrared spectrophotometer (UV-3500 produced by Hitachi, Ltd.), the transmission spectrum at a wavelength of 300 to 1500 nm was measured in the range of 5nm. The measurement was made from the surface where the resin composition was laminated on the substrate. Then, the weighted average of the transmittance at a wavelength of 380 to 780 nm was calculated from the measurement values, thereby obtaining the average transmittance.

<Fiber diameter of carbon nanotube>

The obtained carbon nanotube was observed and images were taken by a scanning transmission electron microscope (JEM-6700M manufactured by JEOL Ltd.). In the observation images, any 100 carbon nanotubes were selected, and their outer diameters were measured. Then, the number average of the measurement values were calculated to thereby obtain the fiber diameter (nm) of the carbon nanotube.

<Average particle diameter of carbon black>

Carbon black was observed and images were taken by a scanning transmission electron microscope (JEM-6700M manufactured by JEOL Ltd.). In the observation images, any 100 carbon blacks were selected, and their outer diameters were measured. Then, the number average of the measurement values were calculated to thereby obtain the average particle diameter (nm) of carbon black.

<Production example of catalyst for synthesis of carbon nanotube and carbon nanotube>

Catalyst for synthesis of carbon nanotube and carbon nanotube used in the examples and the comparative examples described later were prepared by the following method.

<Preparation of catalyst (A) for synthesis of carbon nanotube>

Cobalt acetate tetrahydrate 200g and magnesium acetate tetrahydrate 172g as a supported ingredient were weighed into a beaker. The weighed materials were agitated until homogenization was reached. The homogenized material was shifted to a heat-resistant container. Using an electric oven, the material in the container was dried at a temperature of 190±5°C for 30 minutes to vaporize moisture. After that, the dried material was pulverized using a mortar, and thereby a precursor of the catalyst (A) for synthesis of carbon nanotube was obtained. The obtained precursor 100g was weighed into a heat-resistant container. The precursor was burned in a muffle furnace in an atmosphere of 500±5°C in air for 30 minutes. After that, the burned product was pulverized using a mortar, and thereby a catalyst (A) was obtained.

<Preparation of catalyst (B) for synthesis of carbon nanotube>

Cobalt hydroxide74g and magnesium acetate tetrahydrate 172g as a supported ingredient were weighed into a beaker. The weighed materials were agitated until homogenization was reached. The homogenized material was shifted to a heat-resistant container. Using an electric oven, the material in the container was dried at a temperature of 190±5°C for 30 minutes to vaporize moisture. After that, the dried material was pulverized using a mortar, and thereby a precursor of the catalyst (B) for synthesis of carbon nanotube was obtained. The obtained precursor 100g was weighed into a heat-resistant container. The precursor was burned in a muffle furnace in an atmosphere of 500±5°C in air for 30 minutes. After that, the burned product was pulverized using a mortar, and thereby a catalyst (B) was obtained.

<Preparation of carbon nanotube (A1)>

A heat-resistant plate made of silica glass onto which catalyst (A) for synthesis of carbon nanotube 1.0g was scattered was placed at the center of a horizontal reaction tube. The horizontal reaction tube could be pressurized, could be heated by an external heater, and had an internal volume of 10l. Argon gas was injected into the horizontal reaction tube while air was exhausted, so that the air in the horizontal reaction tube was replaced by argon gas. An atmosphere in the horizontal reaction tube after the replacement had the oxygen concentration of equal to or less than 1 volume%. After that, the reaction tube was heated by an external heater until the center temperature in the horizontal reaction tube reached 700°C. After the center temperature in the horizontal reaction tube reached 700°C, hydrogen gas was introduced into the reaction tube for one minute, at a flow rate of 0.1 liters per minute thereby activating the catalyst. Then, ethylene gas, as a carbon source, was introduced into the reaction tube at a flow rate of 1 liters per minute, for contact reaction for one hour. When the reaction ended, the gas in the reaction tube was replaced by argon gas, thereby cooling the reaction tube until the temperature inside the reaction tube became equal to or lower than 100°C. After the cooling, the generated carbon nanotube was obtained. The obtained carbon nanotube was pulverized with a metal gauze of 80 mesh and filtered.

<Preparation of carbon nanotube (A2)>

A heat-resistant plate made of silica glass onto which catalyst (A) for synthesis of carbon nanotube 1.0g was scattered was placed at the center of a horizontal reaction tube. The horizontal reaction tube could be pressurized, could be heated by an external heater, and had an internal volume of 10l. Argon gas was injected into the horizontal reaction tube while air was exhausted, so that the air in the horizontal reaction tube was replaced by argon gas. An atmosphere in the horizontal reaction tube after the replacement had the oxygen concentration of equal to or less than 1 volume%. After that, the reaction tube was heated by an external heater until the center temperature in the horizontal reaction tube reached 700°C. After the center temperature in the horizontal reaction tube reached 700°C, hydrogen gas was introduced into the reaction tube for one minute, at a flow rate of 0.1 liters per minute thereby activating the catalyst. Then, ethylene gas, as a carbon source, was introduced into the reaction tube at a flow rate of 1 liters per minute, for contact reaction for two hours. When the reaction ended, the gas in the reaction tube was replaced by argon gas, thereby cooling the reaction tube until the temperature of the reaction tube became equal to or lower than 100°C. After the cooling, the generated carbon nanotube was obtained. The obtained carbon nanotube was pulverized with a metal gauze of 80 mesh and filtered.

<Preparation of carbon nanotube (B1)>

A heat-resistant plate made of silica glass onto which catalyst (B) for synthesis of carbon nanotube 1.0g was scattered was placed at the center of a horizontal reaction tube. The horizontal reaction tube could be pressurized, could be heated by an external heater, and had an internal volume of 10l. Argon gas was injected into the horizontal reaction tube while air was exhausted, so that the air in the horizontal reaction tube was replaced by argon gas. An atmosphere in the horizontal reaction tube after the replacement had the oxygen concentration of equal to or less than 1 volume%. After that, the reaction tube was heated by an external heater until the center temperature in the horizontal reaction tube reached 700°C. After the center temperature in the horizontal reaction tube reached 700°C, hydrogen gas was introduced into the reaction tube for one minute, at a flow rate of 0.1 liters per minute thereby activating the catalyst. Then, ethylene gas, as a carbon source, was introduced into the reaction tube at a flow rate of 1 liters per minute, for contact reaction for one hour. When the reaction ended, the gas in the reaction tube was replaced by argon gas, thereby cooling the reaction tube until the temperature of the reaction tube became equal to or lower than 100°C. After the cooling, the generated carbon nanotube was obtained. The obtained carbon nanotube was pulverized with a metal gauze of 80 mesh and filtered.

<Preparation of carbon nanotube (B2)>

A heat-resistant plate made of silica glass onto which catalyst (B) for synthesis of carbon nanotube 1.0g was scattered was placed at the center of a horizontal reaction tube. The horizontal reaction tube can be pressurized, can be heated by an external heater, its internal volume was 10l. Argon gas was injected into the horizontal reaction tube while air is exhausted, so that the air in the horizontal reaction tube was replaced by argon gas. An atmosphere in the horizontal reaction tube after the replacement has the oxygen concentration of equal to or less than 1 volume%. After that, the reaction tube was heated by an external heater until the center temperature in the horizontal reaction tube reaches 700°C. After the center temperature in the horizontal reaction tube reaches 700°C, hydrogen gas was introduced into the reaction tube for one minute, at a flow rate of 0.1 liters per minute thereby activating the catalyst. Then, ethylene gas, as a carbon source, was introduced into the reaction tube at a flow rate of 1 liters per minute, for contact reaction for two hours. When the reaction ends, the gas in the reaction tube was replaced by argon gas, thereby cooling the reaction tube until the temperature of the reaction tube becomes equal to or lower than 100°C. After the cooling, the generated carbon nanotube was obtained. The obtained carbon nanotube was pulverized with a metal gauze of 80 mesh and filtered.

<Preparation of CNT coating liquid>

A preparation method of CNT coating liquid, which is one aspect of the resin composition according to the present invention, is described hereinbelow.

(Example 1)

Epoxy resin solution with a solid content of 40% was prepared by dissolution of Epoxy Resin Grade 1256 produced by Mitsubishi Chemical Corporation in butyl carbitol acetate. The epoxy resin solution was mixed with, at each solid content of 15g, carbon nanotube (A) 0.789g. The epoxy resin solution was kneaded three times by Hoover muller, and thereby CNT coating liquid (A1a) was obtained. The mixing was done under the condition with a load of 150lb (=667N) and a rotation speed of 100rpm.

(Examples 2 to 9)

CNT coating liquid was obtained by the same method as Example 1 except that the type of carbon nanotube and the additive amount of carbon nanotube were changed as shown in Table 1.

Table 1

|  | CNT coating liquid | CNT type | CNT ratio to solid content (%) | Amount of CNT added (g) |
|---|---|---|---|---|
| Example 1 | A1a | A1 | 5 | 0.789 |
| Example 2 | A1e | A1 | 3 | 0.464 |
| Example 3 | A1d | A1 | 10 | 1.67 |

(continued)

| | CNT coating liquid | CNT type | CNT ratio to solid content (%) | Amount of CNT added (g) |
|---|---|---|---|---|
| Example 4 | A1e | A1 | 20 | 2.65 |
| Example 5 | A1f | A1 | 25 | 5 |
| Example 6 | A1g | A1 | 30 | 6.43 |
| Example 7 | A2 | A2 | 5 | 0.789 |
| Example 8 | B1 | B1 | 5 | 0.789 |
| Example 9 | B2 | B2 | 5 | 0.789 |

(Example 10)

Carbon nanotube (A1) 0.789g, styrene acrylic polymer (Joncryl 683 produced by BASF Dispersions & Resins) 15g, and MEK (methyl ethyl ketone) 156.3g were placed in a glass bottle of 225cm$^3$. The material was dispersed for one hour using Paint conditioner with zirconia beads as media, and thereby CNT coating liquid (WA1) was obtained.

(Example 11)

CNT coating liquid (WB1) was obtained by the same method as Example 10 except that the type of carbon nanotube was changed as shown in Table 12.

Table 2

| | CNT coating liquid | CNT type | CNT ratio to solid content (%) | Amount of CNT added (g) |
|---|---|---|---|---|
| Example 10 | WA1 | A1 | 5 | 0.789 |
| Example 11 | WB1 | B1 | 5 | 0.789 |

<Preparation of laminate having carbon nanotube-containing layer>

(Example 12)

A laminate is obtained using PET (polyethylene terephthalate) film (lumirror 100, T60) produced by Toray Industries, Inc. as a substrate. One surface of the substrate was coated with CNT coating liquid (A1a) by using a bar coater. The coating was made so that the film thickness of the carbon nanotube-containing layer became 10μm. After that, the coating liquid was dried in an electric oven at a temperature of 150±5°C for 60 minutes, and thereby a carbon nanotube-containing layer was formed on the substrate. For the obtained laminate, the film thickness of the carbon nanotube-containing layer and values in the L*a*b* color system were measured.

(Examples 13 to 26)

Examples 13 to 26 are different from Example 12 in at least one of the following two points: (1) CNT coating liquid shown in Table 3 was used instead of the CNT coating liquid (A1a) used in Example 12 and (2) the film thickness of CNT- containing layer was changed as shown in Table 3. Besides those points, the carbon nanotube-containing layer was prepared on the substrate by the same method as in Example 12. For the obtained laminate, the film thickness of the carbon nanotube-containing layer and values in the L*a*b* color system were measured.

Table 3 shows conditions for preparation of the carbon nanotube-containing layer according to Examples 12 to 26. Further, Table 3 shows evaluation results of the laminate including the carbon nanotube-containing layer placed on the substrate. The criterion for evaluation of the degree of jet-blackness was as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was +(failure).

Table 3

| | CNT coating liquid | CNT fiber diameter (nm) | CNT ratio to solid content (%) | CNT-containing layer (μm) | L* | a* | b* | Jet-blackness |
|---|---|---|---|---|---|---|---|---|
| Example 12 | A1a | 20 | 5 | 10 | 2.5 | 0.03 | -0.08 | + |
| Example 13 | A2 | 25 | 5 | 10 | 2.4 | 0.05 | -0.6 | + |
| Example 14 | B1 | 8 | 5 | 10 | 1.7 | 0.07 | -1.5 | ++ |
| Example 15 | B2 | 12 | 5 | 10 | 1.8 | 0.08 | -1.2 | ++ |
| Example 16 | A1a | 20 | 5 | 20 | 2.2 | 0.03 | -0.9 | + |
| Example 17 | A1a | 20 | 5 | 30 | 2.2 | 0.06 | -1.1 | + |
| Example 18 | A1a | 20 | 5 | 50 | 2 | 0.04 | -1.1 | ++ |
| Example 19 | WA1 | 20 | 5 | 10 | 2.3 | 0.01 | -0.9 | + |
| Example 20 | WB1 | 8 | 5 | 10 | 2 | 0.09 | -1.4 | ++ |
| Example 21 | WB1 | 8 | 5 | 20 | 1.9 | 0.02 | -1.5 | ++ |
| Example 22 | WB1 | 8 | 5 | 30 | 1.8 | 0.07 | -1.5 | ++ |
| Example 23 | A1c | 20 | 3 | 10 | 2.2 | 0.03 | -0.1 | + |
| Example 24 | A1d | 20 | 10 | 10 | 1.6 | -0.03 | -1 | ++ |
| Example 25 | A1e | 20 | 20 | 10 | 1.7 | 0.04 | -1 | ++ |
| Example 26 | A1f | 20 | 25 | 10 | 1.7 | 0.01 | -1.1 | ++ |

<Preparation of carbon black coating liquid>

(Comparative example 1)

Epoxy resin solution with a solid content of 40% was prepared by dissolution of Epoxy Resin Grade 1256 produced by Mitsubishi Chemical Corporation in butyl carbitol acetate. The epoxy resin solution was mixed with, at each solid content of 15g, carbon black (COLOR Black FW-200) produced by Degussa Corporation 0.789g. It was kneaded three times by Hoover muller, and thereby carbon black coating liquid (C1) was obtained. The mixing was done under the condition with a load of 150lb (=667N) and a rotation speed of 100rpm.

(Comparative example 2)

Carbon black (COLOR Black FW-200) produced by Degussa Corporation 0.789g, styrene acrylic polymer (Joncryl 683 produced by BASF Dispersions & Resins) 15g, and MEK (methyl ethyl ketone) 156.3g were placed in a glass bottle of 225cm³. The material was dispersed for one hour using a paint conditioner with zirconia beads as media, and thereby carbon black coating liquid (WC1) was obtained.

<Preparation of laminate including carbon nanotube-containing layer>

(Comparative example 3)

PET (polyethylene terephthalate) film (lumirror 100, T60) produced by Toray Industries, Inc. was used as a substrate. One surface of the substrate was coated with carbon black coating liquid (C1) by using a bar coater. The coating liquid was applied so that the film thickness of the coating liquid after drying became 10$\mu$m. After that, the coating liquid was dried in an electric oven at a temperature of 150$\pm$5°C for 60 minutes. In this manner, the laminate that includes the carbon nanotube-containing layer on the substrate was prepared.

(Comparative example 4)

Using PET (polyethylene terephthalate) film (lumirror 100, T60) produced by Toray Industries, Inc. as a substrate, one surface of the substrate was coated with carbon black coating liquid (WC1) by using a bar coater. The coating liquid was applied so that the film thickness of the coating liquid after drying became 10$\mu$m. After that, the coating liquid was dried in an electric oven at a temperature of 150$\pm$5°C for 60 minutes. In this manner, the laminate that includes the carbon nanotube-containing layer on the substrate was prepared.

Table 4 shows preparation conditions of the carbon black-containing layer prepared in Comparative examples 3 to 4 and evaluation results of a laminate that includes the obtained carbon black-containing layer. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 4

| | CB coating liquid | CB average particle diameter (nm) | CB ratio to solid content (%) | CB - containing layer ($\mu$m) | L* | a* | b* | Jet-blackness |
|---|---|---|---|---|---|---|---|---|
| Comparative Example 3 | C1 | 13 | 5 | 10 | 2.8 | -0.21 | 0.3 | - |
| Comparative Example 4 | WC1 | 13 | 5 | 10 | 2.9 | -0.25 | 0.5 | - |

<Preparation of laminate>

<Preparation of clear paint>

Preparation of clear paint that was used to form a clear layer was as follows. First, an organic solvent (a liquid mixture composed of toluene/xylene/ethyl acetate/butyl acetate=70parts/15parts/10parts/5parts) was decanted into a round flask. Next, acrylic resin for baking melamine (ACRYDIC A405 produced by DIC Corporation) was added to the organic solvent. Those materials were agitated for one hour, and thereby clear paint was prepared.

(Example 27)

A laminate in which a clear layer is further laminated was prepared using the laminate that includes the carbon nanotube-containing layer prepared in Example 12. The carbon nanotube-containing layer was electrostatically coated with clear paint by using an air spray so that the film thickness of the clear paint after drying became 30 $\mu$m. The obtained coated surface was dried at a temperature of 150$\pm$5°C for 20 minutes to form the clear layer, and thereby a laminate was prepared. For the obtained laminate, values in the L*a*b* color system and the average reflectance were measured.

(Examples 28 to 41)

A laminate in which a clear layer is further laminated was prepared using the laminate that includes the carbon nanotube-containing layer prepared in Examples 13 to 26. The laminate was prepared in each example by the same method as in Example 27. For the obtained laminate, values in the L*a*b* color system and the average reflectance were measured.

Table 5 shows preparation conditions and evaluation results of the laminate prepared in Examples 27 to 41. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 5

| | CNT coating liquid | CNT fiber diameter (nm) | CNT ratio to solid content (%) | CNT-containing layer (μm) | L* | a* | b* | Jet-blackness | Average reflectance (%) |
|---|---|---|---|---|---|---|---|---|---|
| Example 27 | A1a | 20 | 5 | 10 | 2 | 0.12 | -1.3 | ++ | 3.1 |
| Example 28 | A2 | 25 | 5 | 10 | 2.1 | 0.16 | -1 | + | 3.3 |
| Example 29 | B1 | 8 | 5 | 10 | 1.5 | 0.15 | -1.9 | ++ | 2.5 |
| Example 30 | B2 | 12 | 5 | 10 | 1.4 | 0.19 | -1.5 | ++ | 2.8 |
| Example 31 | A1a | 20 | 5 | 20 | 1.9 | 0,13 | -1.4 | ++ | 2.5 |
| Example 32 | A1a | 20 | 5 | 30 | 1.9 | 0.16 | -1.6 | ++ | 2.2 |
| Example 33 | A1a | 20 | 5 | 50 | 1.7 | 0.16 | -1.6 | ++ | 2 |
| Example 34 | WA1 | 20 | 5 | 10 | 2 | 0.21 | -1.3 | ++ | 2.9 |
| Example 35 | WB1 | 8 | 5 | 10 | 1.8 | 0.19 | -1.8 | ++ | 2.8 |
| Example 36 | WB1 | 8 | 5 | 20 | 1.6 | 0.2 | -2 | ++ | 2.7 |
| Example 37 | WB1 | 8 | 5 | 30 | 1.6 | 0.17 | -2 | ++ | 2.5 |
| Example 38 | A1c | 20 | 3 | 10 | 2.4 | 0.13 | -0.5 | + | 4.9 |
| Example 39 | A1d | 20 | 10 | 10 | 1.3 | 0.13 | -1.4 | ++ | 2.2 |
| Example 40 | A1e | 20 | 20 | 10 | 1.4 | 0.12 | -1.3 | ++ | 2.1 |
| Example 41 | A1f | 20 | 25 | 10 | 1.4 | 0.11 | -1.5 | ++ | 2.1 |

(Comparative example 5)

A laminate in which a clear layer is further laminated was prepared using a laminate that includes the carbon black-containing layer prepared in Comparative example 3. The carbon black-containing layer was electrostatically coated with clear paint by using an air spray so that the film thickness of the clear paint after drying became 30μm. The obtained coated surface was dried at a temperature of 150±5°C for 20 minutes to form the clear layer, and thereby a laminate was prepared. For the obtained laminate, value in the L*a*b color system and the average reflectance were measured.

(Comparative example 6)

A laminate in which a clear layer is further laminated was prepared using a laminate that includes the carbon black-containing layer prepared in Comparative example 4. The carbon black-containing layer was electrostatically coated with clear paint by using an air spray so that the film thickness of the clear paint after drying became 30μm. The obtained coated surface was dried at a temperature of 150±5°C for 20 minutes to form the clear layer, and thereby a laminate was prepared. For the obtained laminate, values in the L*a*b* color system and the average reflectance were measured.

Table 6 shows preparation conditions and evaluation results of the laminate prepared in Comparative examples 5 to 6. The criterion for evaluation of the degree of jet-blackness is as follows: the coating with L* of 2.0 or less and b* of 0 or less was ++(excellent), the coating with of 2.1 to 2.4 and b* of 0 or less was +(good), and the coating with L* of 2.5 or more and b* of 0 .1 or more was -(failure).

Table 6

| | CB coating liquid | CB average particle diameter (nm) | CB ratio to solid content (%) | CB - containing layer (μm) | L* | a* | B* | Jet-blackness | Average reflectance (%) |
|---|---|---|---|---|---|---|---|---|---|
| Comparative Example 5 | C1 | 13 | 5 | 10 | 3.2 | 0.21 | 0.3 | - | 5.8 |
| Comparative Example 6 | WC 1 | 13 | 5 | 10 | 3.5 | 0.19 | 0.4 | - | 6.7 |

(Example 42)

A laminate is prepared using a stainless plate produced by Hikari Limited Company (UniHobby (registered trademark) material series, KHS532, thickness 0.5mm) as a substrate. One surface of the substrate was coated with CNT coating liquid (A1a) by using a bar coater so that the film thickness of the CNT coating liquid (A1a) after drying became 10μm. After that, the coating liquid was dried in an electric oven at a temperature of 150±5°C for 60 minutes, and thereby a carbon nanotube-containing layer was formed on the substrate. Further, the carbon nanotube-containing layer was electrostatically coated with clear paint by using an air spray so that the film thickness of the clear paint after drying became 30μm. The obtained coated surface was dried at a temperature of 150±5°C for 20 minutes to form the clear layer, and thereby a laminate was prepared. For the obtained laminate, values in the L*a*b* color system and the average reflectance were measured.

Table 7 shows preparation conditions and evaluation results of the laminate prepared in Example 42. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 7

| | CNT coating liquid | CNT fiber diameter (nm) | CNT ratio to solid content (%) | CNT-containing layer (μm) | L* | a* | b* | Jet-blackness | Average reflectance (%) | Substrate average transmittance (%) |
|---|---|---|---|---|---|---|---|---|---|---|
| Example 42 | Ala | 20 | 5 | 10 | 1.5 | 0.1 | -1.5 | ++ | 2.5 | 0 |

<Preparation of laminate>

<Preparation of transparent protective film>

A material of a transparent protective film to be used for formation of a clear layer is described.

(1) Transparent protective film material A

Hollow silica particle-containing acrylic UV-curable low refractive index material TU-2180 produced by JSR Corporation (solid content concentration 10mass%) was diluted in methyl ethyl ketone so that a solid content became 1.5mass%.

(2) Transparent protective film material B

Hollow silica particle-containing silicone UV-curable low refractive index material ELCOM P-5024 produced by JGC Catalysts and Chemicals Ltd. (solid content concentration 3mass%) was diluted in methyl ethyl ketone so that a solid content concentration became 1.5mass%.

(3) Transparent protective film material C

PET (polyethylene terephthalate) film (lumirror 100, T60) produced by Toray Industries, Inc. was used as the transparent protective film material C.

(Example 43)

A laminate in which a clear layer is further laminated was prepared using the laminate that includes the carbon nanotube-containing layer prepared in Example 12. The carbon nanotube-containing layer was electrostatically coated with the transparent protective film material A by using an air spray so that the film thickness of the transparent protective film material A after drying became 30 $\mu$m. The obtained coated surface was dried at a temperature of 80$\pm$5°C for 20 minutes. After that, activation energy dose of 500mJ/cm$^2$ was applied for curing to form the clear layer, and thereby a laminate was prepared. For the obtained laminate, values in the L*a*b* color system were measured.

(Example 44)

A laminate in which a clear layer is further laminated was prepared using the laminate that includes the carbon nanotube-containing layer prepared in Example 12. The carbon nanotube-containing layer was electrostatically coated with the transparent protective film material B by using an air spray so that the film thickness of the transparent protective film material A after drying became 30 $\mu$m. The obtained coated surface was dried at a temperature of 80$\pm$5°C for 20 minutes. After that, activation energy dose of 500mJ/cm$^2$ was applied for curing to form the clear layer, and thereby a laminate was prepared. For the obtained laminate, values in the L*a*b* color system were measured.

(Example 45)

A laminate in which a clear layer is further laminated was prepared using the laminate that includes the carbon nanotube-containing layer prepared in Example 12. A clear layer was formed by superimposing the transparent protective film material C on the carbon nanotube-containing layer, and thereby a laminate was prepared. For the obtained laminate, values in the L*a*b* color system were measured.

Table 8 shows preparation conditions and evaluation results of the laminate prepared in Examples 43 to 45. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 8

| | CNT coating liquid | CNT fiber diameter (nm) | CNT ratio to solid content (%) | CNT-containing layer (μm) | L* | a* | b* | Jet-blackness |
|---|---|---|---|---|---|---|---|---|
| Example 43 | Ala | 20 | 5 | 10 | 2 | 0.1 | -0.8 | ++ |
| Example 44 | Ala | 20 | 5 | 10 | 2 | 0.09 | -1 | ++ |
| Example 45 | Ala | 20 | 5 | 10 | 2.2 | 0.05 | -0.1 | + |

<Production of polyester resin solution>

A thermometer, a mixer, and a cooling tube were mounted on a 5L 4-neck flask. Trimethylolpropane 134g and adipic acid 1752g were poured into the flask and mixed. This mixture was raised in temperature to 210°C in an atmosphere of nitrogen gas. Then, a condensation reaction was carried out for seven hours. After cooling the product down to 170°C, 3-methyl-1,5-pentanediol 1416g was added little by little. When this mixture became a homogeneous solution, tris-isopropoxy titanate was added as a catalyst. Tris-isopropoxy titanate was added to the mixture at a ratio of 80ppm to the whole solid content. The mixture was refluxed, and the condensation reaction continued for twelve hours until the acid value of the reaction solid content became less than 0.1mgKOH/g When the hydroxyl value became more than 55mgKOH/g, maleic anhydride 294.18g was added little by little, to react with the mixture. Further, tris-isopropoxy titanate was added to the mixture little by little at a ratio of 50ppm to the whole solid content. The reaction was brought to an end when the acid value became 52mgKOH/g. When condensation water was sufficiently removed from the product under reduced pressure, carboxyl group-containing polyester with an average molecular weight of 3160 and exhibits 390mPa·s at 25°C was obtained.

Next, a thermometer and a mixer were mounted on a 1L 4-neck flask, which was prepared separately. Dipentaerythritol hexaacrylate 93.75g was poured into the flask, and was raised in temperature to 60°C. Then, the above-described carboxyl group-containing polyester 6.25g was added to the above material little by little to dissolve them. Further, p-methoxyphenol 0.94g was added as a thermal polymerization inhibitor to the above material. After adding p-methoxyphenol, the mixing continued until it completely dissolved. The dissolved material was kept at a temperature of 60°C, and then diisopropoxy aluminum monoaceto ethyl acetate ester 3.13g was added to the dissolved material. In this process, a polyester resin solution was obtained.

<Preparation of CNT coating liquid>

(Example 46)

<Preparation of laminate having carbon nanotube-containing layer>

Carbon nanotube (A1) 8.6g, polyester resin solution 60.2g, Irgacure 907 (produced by BASF Japan Ltd,) 12.0g, DETX-S (produced by Nippon Kayaku Co.,Ltd.) 5.2g, M-408 (produced by Toagosei Co., Ltd.) 51.6g, and DT-170 (polyester produced by Tohto Chemical Industry Co.,Ltd.) 34.4g were mixed. The mixture was kneaded three times by Hoover muller, and thereby CNT coating liquid (A1aA) was obtained. The conditions for the mixing were a load of 150lb (=667N) and a rotation speed of 100rpm.

(Example 47)

<Preparation of laminate>

A laminate was obtained using PET (polyethylene terephthalate) film (lumirror 100, T60) produced by Toray Industries, Inc. as a substrate. On one surface of the substrate, CNT coating liquid (A1aA) was printed by using an UV irradiation roll coater. The printing was made so that the film thickness of the coating liquid after drying became 10μm. The carbon nanotube-containing layer was formed on the substrate, and thereby a laminate was obtained.

(Example 48)

A laminate in which a clear layer is further laminated was prepared using the laminate that includes the carbon nanotube-containing layer prepared in Example 47. The carbon nanotube-containing layer was electrostatically coated with clear paint by using an air spray so that the film thickness of the clear paint after drying became 30 μm. The obtained coated surface was dried at a temperature of 150±5°C for 20 minutes to form the clear layer, and thereby a laminate was prepared. For the obtained laminate, values in the L*a*b* color system were measured.

Table 9 shows preparation conditions and evaluation results of the laminate prepared in Example 48. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 9

| | CNT ink | CNT fiber diameter (nm) | CNT ratio to solid content (%) | CNT-containing layer (μm) | L* | a* | b* | Jet-blackness |
|---|---|---|---|---|---|---|---|---|
| Example 48 | AlaA | 20 | 5 | 10 | 1.8 | 0.07 | -1.2 | ++ |

<Preparation of acrylic melamine paint containing carbon nanotube>

(Example 49)

Carbon nanotube (A1) 3.2g, acrylic resin (Acrydic 47-712 produced by DIC Corporation) 25.6g, a solvent (a mixed solvent of toluene : xylene : butyl acetate : Solvesso #150 by Exxon Mobil Corporation with a mass ratio of 3:3:2:2) 68.2g and zirconia beads 150g were weighed into a glass bottle of 225cm$^3$, and after dispersion for two hours by Paint conditioner manufactured by Red Devil, Inc., the zirconia beads were separated and removed, and thereby a dispersed system of carbon nanotube was obtained. The dispersed system 100 parts by mass, acrylic resin (Acrydic 47-712 produced by DIC Corporation) 73.9 parts by mass, and melamine resin (Super-Beckamine L-177-60 produced by DIC Corporation) 20.9 parts by mass were agitated by a high-speed mixer, and thereby CNT coating liquid (acrylic melamine paint) was obtained.

<Preparation of acrylic urethane paint containing carbon nanotube>

(Example 50)

Carbon nanotube (A1) 3.0g, acrylic polyol resin (AcrydicA-801-P produced by DIC Corporation) 24.0g, a solvent (a mixed solvent of toluene : butyl acetate with a mass ratio of 7:3) 88.4g and zirconia beads 150g were poured into a glass bottle of 225cm$^3$. Those materials were dispersed for two hours by Paint conditioner manufactured by Red Devil, Inc.. After that, the zirconia beads were separated and removed from the dispersed material, and thereby a dispersed system of carbon nanotube was obtained. The dispersed system 100 parts by mass, acrylic polyol resin (AcrydicA-801-P produced by DIC Corporation) 47.3 parts by mass, and isocyanate resin (Burnock DN-950 produced by DIC Corporation) 20.4 parts by mass were agitated by a high-speed mixer. CNT coating liquid (acrylic urethane paint) was thereby obtained.

<Preparation of transparent acrylic melamine paint>

Acrylic resin (Acrydic 44-179 produced by DIC Corporation) 100 parts by mass, and melamine resin (Super-Beckamine L-177-60 produced by DIC Corporation) 25 parts by mass were agitated by a high-speed mixer, and thereby a transparent acrylic melamine paint was obtained.

<Preparation of transparent acrylic urethane paint>

Just before coating, acrylic polyol resin (AcrydicA-801-P produced by DIC Corporation) 100 parts by mass, and isocyanate resin (Burnock DN-950 produced by DIC Corporation) 30 parts by mass were agitated by a high-speed mixer, and thereby transparent acrylic urethane paint was obtained.

<Dilution of CNT coating liquid>

The dilution of CNT coating liquid that is used to form a carbon nanotube-containing layer was carried out in a mixed solvent. The mixed solvent had a composition of toluene : xylene : butyl acetate: Solvesso #150 by Exxon Mobil Corporation with a mass ratio of 3:3:2:2. The mixed solvent and CNT coating liquid were poured into a beaker, and agitated for five minutes by a high-speed mixer. Clear paint with an appropriate viscosity for spray coating was thereby prepared.

<Dilution of clear paint>

The dilution of clear paint that is used to form a clear layer was carried out in a diluting solvent. Clear paint and a diluting solvent were poured into a beaker, and agitated for five minutes by a high-speed mixer. Clear paint with an appropriate viscosity for spray coating was thereby prepared.
In the case of using acrylic melamine paint, the composition of a diluting solvent of clear paint was toluene : xylene : butyl acetate: Solvesso #150 by Exxon Mobil Corporation with a mass ratio of 3:3:2:2. In the case of using acrylic urethane paint, the composition of a diluting solvent was toluene : butyl acetate with a mass ratio of 3:7.

<Preparation of acrylic melamine laminate containing carbon nanotube>

(Example 51)

CNT coating liquid (acrylic melaminepaint) obtained in Example 49 was diluted to a viscosity that is appropriate for spray coating in a mixed solvent (toluene : xylene : butyl acetate : Solvesso #150 by Exxon Mobil Corporation with a mass ratio of 3:3:2:2). The diluted CNT coating liquid was applied onto a tin plate by spray coating so that the film thickness of the CNT coating liquid became 30μm. The spray coating was carried out by using an air spray gun (W-61-2G produced by Anest Iwata Corporation). The tin plate was left at room temperature for 30 minutes. After that, the paint was dried by a drier at 80°C for 20 minutes. Besides, transparent acrylic melamine paint was diluted to a viscosity that is appropriate for spray coating in a mixed solvent (a mixed solvent of toluene : xylene : butyl acetate : Solvesso #150 by Exxon Mobil Corporation with a mass ratio of 3:3:2:2). The diluted transparent acrylic melamine paint was applied onto the dried CNT coating liquid by spray coating. The spray coating was carried out by using an air spray gun (W-61-2G produced by Anest Iwata Corporation) so that the film thickness of the transparent acrylic melamine became 30μm. After coating, the tin plate was left at room temperature for 30 minutes to dry the paint. Then, the tin plate was burned by a drier at 140°C for 30 minutes. An acrylic melamine laminate containing carbon nanotube was thereby obtained. For the obtained laminate, values in the L*a*b* color system were measured.

<Preparation of acrylic urethane laminate containing carbon nanotube>

(Example 52)

CNT coating liquid (acrylic urethane paint) obtained in Example 50 was diluted to a viscosity that is appropriate for spray coating in a mixed solvent (toluene : butyl acetate with a mass ratio of 3:7). The diluted CNT coating liquid was applied onto a tin plate by spray coating so that the film thickness of the CNT coating liquid became 30μm. The spray coating was carried out by using an air spray gun (W-61-2G produced by Anest Iwata Corporation). The coated tin plate was left at room temperature for 30 minutes, and then the CNT coating liquid was dried by a drier at 80°C for 20 minutes. Besides, transparent acrylic urethane paint was diluted to a viscosity that is appropriate for spray coating in a solvent (a mixed solvent of toluene : butyl acetate with a mass ratio of 7:3). The diluted transparent acrylic urethane paint was applied onto the dried CNT coating liquid by spray coating. The spray coating was carried out by using an air spray gun (W-61-2G produced by Anest Iwata Corporation) so that the film thickness of the transparent acrylic urethane paint became 30μm. After coating, the tin plate was left at room temperature for 30 minutes. After that, it was burned by a drier at 80°C for 30 minutes to dry the paint. An acrylic urethane laminate containing carbon nanotube was thereby obtained. For the obtained laminate, values in the L*a*b* color system were measured.
Table 10 shows preparation conditions and evaluation results of the laminate prepared in Examples 51 and 52. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 10

| | CNT coating liquid | CNT fiber diameter (nm) | CNT ratio to solid content (%) | CNT-containing layer (μm) | L* | a* | b* | Jet-blackness |
|---|---|---|---|---|---|---|---|---|
| Example 51 | acrylic melamine paint | 20 | 5 | 10 | 1.63 | 0.02 | -0.33 | ++ |
| Example 52 | acrylic urethane paint | 20 | 5 | 10 | 1.52 | 0.04 | -0.38 | ++ |

<Preparation of acrylic melamine paint containing carbon black>

(Comparative example 7)

Carbon black (Color Black FW-200 produced by Degussa Corporation) 3.2g, acrylic varnish (Acrydic 47-712 produced by DIC Corporation) 25.6g, solvent (a mixed solvent of toluene : xylene : butyl acetate : Solvesso #150 by Exxon Mobil Corporation with a mass ratio of 3:3:2:2) 42.3g and zirconia beads 150g were poured into a glass bottle of 225cm$^3$. Those materials were dispersed for two hours by Paint conditioner manufactured by Red Devil, Inc. After that, the zirconia beads were separated and removed from the dispersed material, and thereby a dispersed system of carbon black was obtained. The dispersed system 100 parts by mass, acrylic varnish (Acrydic 47-712 produced by DIC Corporation) 100.8 parts by mass and melamine varnish (Super-Beckamine L-177-60 produced by DIC Corporation) 28.5 parts by mass were agitated by a high-speed mixer. Carbon black coating liquid (acrylic melamine paint) was thereby obtained.

<Preparation of acrylic urethane paint containing carbon black>

(Comparative example 8)

Carbon black (Color Black FW-200 produced by Degussa Corporation) 3.0g, acrylic polyol varnish (Acrydic A-801-P produced by DIC Corporation) 24.0g, solvent (a mixed solvent of toluene : butyl acetate with a mass ratio of 7:3) 69.8g and zirconia beads 150g were poured into a glass bottle of 225cm$^3$. Those materials were dispersed for two hours by Paint conditioner manufactured by Red Devil, Inc. After that, the zirconia beads were separated and removed from the dispersed material, and thereby a dispersed system of carbon black was obtained. Just before coating, the dispersed system 100 parts by mass, acrylic polyol varnish (Acrydic A-801-P produced by DIC Corporation) 56.5 parts by mass, and isocyanate varnish (Burnock DN-950 produced by DIC Corporation) 28.5 parts by mass were agitated by a high-speed mixer. Carbon black coating liquid (acrylic urethane paint) was thereby obtained.

<Preparation of acrylic melamine laminate containing carbon black>

(Comparative example 9)

Carbon black coating liquid (acrylic melamine paint) obtained in Comparative example 7 was diluted to a viscosity that is appropriate for spray coating in a mixed solvent (toluene : xylene : butyl acetate : Solvesso #150 by Exxon Mobil Corporation with a mass ratio of 3:3:2:2). The diluted CB coating liquid was applied onto a tin plate by spray coating so that the film thickness of the CB coating liquid became 30μm. The spray coating was carried out by using an air spray gun (W-61-2G produced by Anest Iwata Corporation). The tin plate was left at room temperature for 30 minutes, and then the paint was dried by a drier at 80°C for 20 minutes. Besides, transparent acrylic melamine paint was diluted to a viscosity that is appropriate for spray coating in a mixed solvent (a mixed solvent of toluene : xylene : butyl acetate : Solvesso #150 by Exxon Mobil Corporation with a mass ratio of 3:3:2:2). The diluted transparent acrylic melamine paint was applied onto the dried CB coating liquid by spray coating. The spray coating was carried out by using an air spray gun (W-61-2G produced by Anest Iwata Corporation) so that the film thickness of the transparent acrylic melamine became 30μm. After coating, the tin plate was left at room temperature for 30 minutes. Then, the tin plate was burned by a drier at 140°C for 30 minutes to dry the paint. An acrylic melamine laminate of carbon black was thereby obtained. For the obtained laminate, values in the L*a*b* color system were measured.

<Preparation of acrylic urethane laminate containing carbon black>

(Comparative example 10)

Carbon black coating liquid (acrylic urethane paint) obtained in Comparative example 8 was diluted to a viscosity that is appropriate for spray coating in a mixed solvent (toluene : butyl acetate with a mass ratio of 3:7). The diluted CB coating liquid was applied onto a tin plate by spray coating so that the film thickness of the CB coating liquid became 30μm. The spray coating was carried out by using an air spray gun (W-61-2G produced by Anest Iwata Corporation). The tin plate was left at room temperature for 30 minutes, and then the paint was dried by a drier at 80°C for 20 minutes. Besides, transparent acrylic urethane paint was diluted to a viscosity that is appropriate for spray coating in a mixed solvent (toluene : butyl acetate with a mass ratio of 7:3). The diluted transparent acrylic urethane paint was applied onto the dried CB coating liquid by spray coating. The spray coating was carried out by using an air spray gun (W-61-2G produced by Anest Iwata Corporation) so that the film thickness of the transparent acrylic urethane paint became 30μm. After coating, the tin plate was left at room temperature for 30 minutes. After that, it was burned by a drier at 80°C for 30 minutes to dry the paint. An acrylic urethane laminate of carbon black was thereby obtained. For the obtained laminate, values in the L*a*b* color system were measured.

Table 11 shows preparation conditions and evaluation results of the laminate prepared in Comparative examples 9 and 10. The criterion for evaluation of the degree of jet-blackness is as follows: the coating with L* of 2.0 or less and b* of 0 or less was ++(excellent), the coating with L* of 2.1 to 2.4 and b* of 0 or less was +(good), and the coating with L* of 2.5 or more and b* of 0 .1 or more was -(failure).

Table 11

| | CB coating liquid | CB average particle diameter (nm) | CB ratio to solid content (%) | CB - containing layer (μm) | L* | a* | b* | Jet-blackness |
|---|---|---|---|---|---|---|---|---|
| Comparative example 9 | acrylic melamine paint | 13 | 5 | 10 | 2.48 | 0 | 0.43 | - |
| Comparative example 10 | acrylic melamine paint | 13 | 5 | 10 | 1.98 | -0.02 | 0.11 | - |

In the above-described Examples, a resin composition and a laminate that contain carbon nanotube and resin were used. In Comparative examples, a resin composition and a laminate that uses carbon black were used. In Examples, a resin composition and a laminate with a higher degree of jet-blackness than those in Comparative examples were obtained. Therefore, it was found that, according to the present invention, it is possible to provide a resin composition and a laminate with jet-blackness that is difficult to be achieved by carbon black.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2014-121732, filed on June 12, 2014 and Japanese patent application No. 2014-235234, filed on November 20, 2014, the disclosure of which is incorporated herein in its entirety by reference.

**Claims**

1. A laminate where a carbon nanotube-containing layer comprising at least carbon nanotube and resin is laminated above a substrate, and a clear layer is further laminated above a surface laminated with the carbon nanotube-containing layer,
   wherein the laminate has L* being equal to or less than 2.5, a* being in a range of -2 to 2, and b* being in a range of -2 to 0.3, each measured from a direction of the laminated surface,
   the carbon nanotube-containing layer above the substrate is formed by coating, and
   the clear layer is transparent resin or glass,
   where L*, a* and b* indicate values in L*a*b* color system specified in JIS Z8729.

**2.** The laminate according to Claim 1, wherein a fiber diameter of carbon nanotube is 8 to 25nm.

**3.** The laminate according to any one of Claims 1 and 2, wherein an amount of carbon nanotube in the carbon nanotube-containing layer is 3 to 30mass%.

**4.** The laminate according to any one of Claims 1 to 3, wherein a film thickness of the carbon nanotube-containing layer is 10 to 50$\mu$m.

**5.** The laminate according to any one of Claims 1 to 4, wherein a film thickness of the clear layer is 5 to 40$\mu$m.

**6.** The laminate according to any one of Claims 1 to 5, wherein an average reflectance of the laminate at a wavelength of 380 to 780nm measured from the laminated surface is equal to or less than 5%.

**7.** The laminate according to any one of Claims 1 to 6, wherein an average transmittance of the substrate at a wavelength of 380 to 780nm is equal to or less than 5%.

**8.** A production method of a laminate where
a carbon nanotube-containing layer comprising at least carbon nanotube and resin is laminated above a substrate, and
a clear layer is further laminated above a surface laminated with the carbon nanotube-containing layer,
wherein the laminate has L* being equal to or less than 2.5, a* being in a range of -2 to 2, and b* being in a range of -2 to 0.3, each measured from a direction of the laminated surface,
the carbon nanotube-containing layer above the substrate is formed by coating, and
the clear layer is transparent resin or glass,
where L*, a* and b* indicate values in L*a*b* color system specified in JIS Z8729.

**Patentansprüche**

**1.** Laminat, bei dem eine Kohlenstoff-Nanoröhrchen enthaltende Schicht, die mindestens Kohlenstoff-Nanoröhrchen und Harz umfasst, über ein Substrat laminiert ist, und eine klare Schicht ferner über eine Oberfläche laminiert ist, die mit der Kohlenstoff-Nanoröhrchen enthaltenden Schicht laminiert ist,
wobei das Laminat L* gleich oder weniger als 2,5, a* in einem Bereich von -2 bis 2, und b* in einem Bereich von -2 bis 0,3 aufweist, jeweils gemessen aus einer Richtung der laminierten Oberfläche,
wobei die Kohlenstoff-Nanoröhrchen enthaltende Schicht über dem Substrat durch Beschichten gebildet ist, und die klare Schicht transparentes Harz oder Glas ist,
wobei L*, a* und b* Werte in dem in JIS Z8729 spezifizierten L*a*b*-Farbsystem angeben.

**2.** Laminat nach Anspruch 1, wobei ein Kohlenstoff-Nanoröhrchen-Faserdurchmesser 8 bis 25 nm beträgt.

**3.** Laminat nach einem der Ansprüche 1 und 2, wobei eine Menge an Kohlenstoff-Nanoröhrchen in der Kohlenstoff-Nanoröhrchen enthaltenden Schicht 3 bis 30 Massen-% beträgt.

**4.** Laminat nach einem der Ansprüche 1 bis 3, wobei eine Filmdicke der Kohlenstoff-Nanoröhrchen enthaltenden Schicht 10 bis 50 $\mu$m beträgt.

**5.** Laminat nach einem der Ansprüche 1 bis 4, wobei eine Filmdicke der klaren Schicht 5 bis 40 $\mu$m beträgt.

**6.** Laminat nach einem der Ansprüche 1 bis 5, wobei ein durchschnittliches Reflexionsvermögen des Laminats bei einer Wellenlänge von 380 bis 780 nm, gemessen von der laminierten Oberfläche, gleich oder weniger als 5% ist.

**7.** Laminat nach einem der Ansprüche 1 bis 6, wobei eine durchschnittliche Durchlässigkeit des Substrats bei einer Wellenlänge von 380 bis 780 nm gleich oder weniger als 5% ist.

**8.** Herstellungsverfahren für ein Laminat, bei dem
eine Kohlenstoff-Nanoröhrchen enthaltende Schicht, die mindestens Kohlenstoff-Nanoröhrchen und Harz umfasst, über ein Substrat laminiert wird, und
eine klare Schicht ferner über eine Oberfläche laminiert wird, die mit der Kohlenstoff-Nanoröhrchen enthaltenden Schicht laminiert ist,
wobei das Laminat L* gleich oder weniger als 2,5, a* in einem Bereich von -2 bis 2, und b* in einem Bereich von -2 bis 0,3 aufweist, jeweils gemessen aus einer Richtung der laminierten Oberfläche,
wobei die Kohlenstoff-Nanoröhrchen enthaltende Schicht über dem Substrat durch Beschichten gebildet wird, und die klare Schicht transparentes Harz oder Glas ist,
wobei L*, a* und b* Werte in dem in JIS Z8729 spezifizierten L*a*b*-Farbsystem angeben.

**Revendications**

1. Stratifié où une couche contenant des nanotubes de carbone comprenant au moins des nanotubes de carbone et une résine est stratifiée sur un substrat, et une couche claire est en outre stratifiée sur une surface stratifiée avec la couche contenant des nanotubes de carbone,
dans lequel le stratifié a L* étant inférieure ou égale à 2,5, a* étant dans une plage de -2 à 2, et b* étant dans une plage de -2 à 0,3, chacune mesurée à partir d'une direction de la surface stratifiée,
la couche contenant des nanotubes de carbone sur le substrat est formée par revêtement, et
la couche claire est une résine ou un verre transparent,
où L*, a* et b* indiquent des valeurs dans un système de couleurs L*a*b* spécifié dans la norme JIS Z8729.

2. Stratifié selon la revendication 1, dans lequel un diamètre de fibre des nanotubes de carbone est de 8 à 25 nm.

3. Stratifié selon l'une quelconque des revendications 1 et 2, dans lequel une quantité de nanotubes de carbone dans la couche contenant des nanotubes de carbone est de 3 à 30 % en masse.

4. Stratifié selon l'une quelconque des revendications 1 à 3, dans lequel une épaisseur de film de la couche contenant des nanotubes de carbone est de 10 à 50 $\mu$m.

5. Stratifié selon l'une quelconque des revendications 1 à 4, dans lequel une épaisseur de film de la couche claire est de 5 à 40 $\mu$m.

6. Stratifié selon l'une quelconque des revendications 1 à 5, dans lequel un facteur de réflexion moyen du stratifié à une longueur d'onde de 380 à 780 nm mesuré à partir de la surface stratifiée est inférieur ou égal à 5 %.

7. Stratifié selon l'une quelconque des revendications 1 à 6, dans lequel une transmittance moyenne du substrat à une longueur d'onde de 380 à 780 nm est inférieure ou égale à 5 %.

8. Procédé de production d'un stratifié où
une couche contenant des nanotubes de carbone comprenant au moins des nanotubes de carbone et une résine est stratifiée sur un substrat, et
une couche claire est en outre stratifiée sur une surface stratifiée avec la couche contenant des nanotubes de carbone,
dans lequel le stratifié a L* étant inférieure ou égale à 2,5, a* étant dans une plage de -2 à 2, et b* étant dans une plage de -2 à 0,3, chacune mesurée à partir d'une direction de la surface stratifiée,
la couche contenant des nanotubes de carbone sur le substrat est formée par revêtement, et
la couche claire est une résine ou un verre transparent,
où L*, a* et b* indiquent des valeurs dans un système de couleurs L*a*b* spécifié dans la norme JIS Z8729.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010192186 A
- JP 2004526838 W
- JP 2001179176 A
- JP 2004098033 A
- JP H6122834 B
- JP H6136287 B
- JP 2008285632 A
- JP H615223 B
- JP H871501 B

- JP 2010279899 A
- EP 2431175 A1
- US 20100059495 A1
- US 20090142579 A1
- WO 2007114645 A1
- EP 1764382 A1
- JP 2014121732 A
- JP 2014235234 A